# EUROPEAN PATENT APPLICATION

(11) **EP 1 512 330 A1**
(43) Date of publication of application: **09.03.2005**
(21) Application number: 03077835.1
(22) Date of filing: 08.09.2003
(51) Int. Cl.: A23L 1/212, A23L 1/40, A23L 1/164

(54) **Method for preparing a food product comprising freeze dried fruits or vegetables, and a food product obtainable by said method**

(71) Applicant: Nederlandse Organisatie voor Toegepast-Natuurwetenschappelijk Onderzoek TNO, 2628 VK Delft (NL)
(72) Inventor: Akkerman, Jan Coen, 6706 EE Wageningen (NL); Bussmann, Paulus Josephus Theodorus, 7325 NM Apeldoorn (NL); Averink, Herman Joseph Bernardus, 7462 RX Rijssen (NL)
(74) Representative: Prins, Adrianus Willem, Mr. Ir.

(57) **Abstract**

The invention relates to a method for preparing a food product wherein a first component and a second component are mixed, whereby the first component comprises a freeze-dried vegetable or fruit component having a water activity of from 0.2 to 0.4, the second component comprises a complementary food component having a water activity of from 0.15 to 0.30, and whereby the mixture so obtained has an equilibrium water activity of less than 0.35. The invention further relates to a food product obtainable by the method according to the present invention.

## Description

The invention relates to a method for preparing a food product wherein a freeze-dried vegetable or fruit component is mixed with a complementary food product component, and each component has a particular water activity. The invention further relates to a food product obtainable by the method according to the invention.

It is known to prepare dry food products by mixing freeze-dried vegetable or fruit pieces and a complementary food product component such as a binding component or a cereal component. Such products include for example instant soups or breakfast foods. These products are usually mixed with hot water or a dairy product such as milk or yoghurt before they are consumed.

These freeze-dried vegetable or fruit pieces are usually very dry and as a result extremely brittle and fragile. Consequently, these pieces are rubbed off when they are mixed with the binding component or cereal component which causes the formation of a lot of dust and chippings which eventually form a sticky layer in the production environment. The necessary removal of this sticky layer is labour-intensive and affects the production capacity of the plant. Additionally, the rubbing off also affects the recognizability of the vegetable or fruit pieces, whereas the final food product takes increasingly the colour of the vegetable or fruit pieces, which is undesirable in view of the required consistent quality of the food product.

Surprisingly, it has now been found that these problems can be solved when use is made of freeze-dried vegetable or fruit pieces and a complementary food component, both having particular water activities before they are being mixed.

The present invention therefore relates to a method for preparing a food product wherein a first component and a second component are mixed, whereby the first component comprises a freeze-dried vegetable or fruit component having a water activity of from 0.2 to 0.4, the second component comprises a complementary food component having a water activity of from 0.15 to 0.30, and whereby the mixture so obtained has an equilibrium water activity of less than 0.35.

The method according to the present invention deals with the above-mentioned problems that occur as a result of the dust and chippings formation. In addition, the food product obtained in accordance with the present invention is shelf stable, displays a desired crunchiness, and looks attractive to the consumer.

In the method according to the present invention preferably use is made of a freeze-dried vegetable of fruit component having a water activity of from 0.2 to 0.3. More preferably, use is made of a freeze-dried vegetable of fruit component having a water activity of from 0.25 to 0.30.

In accordance with the present invention the second component has preferably a water activity of from 0.15 to 0.25.

The mixture obtained with the method according to the present invention has preferably an equilibrium water activity of from 0.2 to 0.3, more preferably of from 0.25 to 0.30.

The above-mentioned water activities and equilibrium water activities are determined by measuring the relative moisture content in the gaseous phase above the product as, for instance, described in Moisture Sorption: Practical Aspects of Isotherm Measurement and Use (L.N.Bell & T.P.Labuza 2000).

The freeze-dried vegetable or fruit component is preferably mixed with the second component at a temperature of from 10 to 40°C.

The amounts of the first component and second component to be mixed can vary considerably. Preferably, the weight ratio of the first component (A) and the second component (B) ranges from 1:5 to 1:1000 (A/B), more preferably from 1:25 to 1:100 (A/B).

In case the first component comprises freeze-dried vegetable(s) and/or vegetable pieces, the second component preferably comprises a binder component. Suitable binder components include polysaccharides such as, for instance, (modified) starch, guar gum, proteins or protein derivatives. The type of binding component to be used will depend on the type of food product that one wishes to prepare. When one wants, for instance, to prepare a clear instant soup a guar gum will preferably be used as the binding component, whereas in the preparation of a creamy soup preferably use is made of starch as the binding component.

A large variety of freeze-dried vegetables or vegetable pieces can be applied in the process according to the present invention. Suitable examples include, but are not limited to, parsley leaves, broccoli pieces, cauliflower pieces and celery leaves.

The method according to the present invention is particularly useful when the first component comprises freeze-dried fruit and/or fruit pieces and the second component comprises cereal particles.

A large variety of freeze-dried fruit or fruit pieces can be used in the method according to the present invention. Suitable examples include, but are not limited to, strawberries, raspberries, apples, pears, peaches, apricots, pineapple, blueberries, berries, kiwis, cherries, bananas, oranges, and/or pieces thereof.

The first component used in accordance of the present invention is freeze-dried. Various known freeze-dry processes can be used to freeze-dry the first component. It important to select the conditions in the freeze-dry process in such a way that the freeze-dried first component will have a water activity of from 0.2 to 0.4.

The cereal particles have suitably been subjected to a heat treatment before they are being subjected to the method according to the present invention. Heat treatments that are known in the art can be used for this purpose, and include roasting, toasting, puffing, extrusion, micronizing and/or drying. Preferably, the cereal particles will have been roasted.

Various types of roasted cereal particles can be used in accordance with the present invention. Suitable examples include, but are not limited to, oat flakes, wheat flakes, rice crisps and corn flakes.

Preferably, the roasted cereal particles comprise oat flakes. The cereal particles to be used can be a mixture of two or more types of cereal particles.

Other components such as nuts, honey and sugar can be added to the second component before or after the heat treatment.

The food product obtained in accordance with the present invention can subsequently be packaged in a package that does not allow water vapour equilibration between the food product and the atmosphere. Suitable packages are known in the art and include for instance packages made of synthetic materials/fibres or packages made of a thin foil of aluminium.

The food products to be prepared with the method according to the present invention include for example instant soups and breakfast cereals such as muesli.

The food products prepared with the method of the present invention display unique properties in the sense that they are shelf stable, they have a very satisfactory chrunchiness, and they look very appealing to the consumer. Especially the food products that contain freeze-dried fruit of fruit pieces and roasted cereal particles display a unique crunchiness.

The present invention therefore also relates to a food product obtainable by the method according to the present invention.

## Claims

1. Method for preparing a food product wherein a first component and a second component are mixed, whereby the first component comprises a freeze-dried vegetable or fruit component having a water activity of from 0.2 to 0.4, the second component comprises a complementary food component having a water activity of from 0.15 to 0.30, and whereby the mixture so obtained has an equilibrium water activity of less than 0.35.

2. Method according to claim 1, wherein the first component has a water activity of from 0.2 to 0.3.

3. Method according to claim 2, wherein the first component has a water activity of from 0.25 to 0.30.

4. Method according to any one of claims 1-3, wherein the second component has a water activity of from 0.15 to 0.25.

5. Method according to any one of claims 1-4, wherein the mixture obtained has an equilibrium water activity of from 0.2 to 0.3.

6. Method according to claim 5, wherein the mixture obtained has an equilibrium water activity of from 0.25 to 0.30.

7. Method according to any one of claims 1-6, wherein the first component and the second component are mixed at a temperature of from 10 tot 40 °C.

8. Method according to any one of claims 1-7, wherein the weight ratio of the first component (A) and the second component (B) ranges from 1:5 to 1:1000 (A/B).

9. Method according to claim 8, wherein the weight ratio of the first component (A) and the second component (B) ranges from 1:25 to 1:100 (A/B).

10. Method according to any one of claims 1-9, wherein the first component comprises vegetable(s) and/or vegetable pieces and the second component comprises a binding component.

11. Method according to any one of claims 1-9, wherein the first component comprises freeze-dried fruit and/or fruit pieces and the second component comprises cereal particles.

12. Method according to claim 11, wherein the cereal particles comprise roasted cereal particles.

13. Method according to any one of claims 1-12, wherein the mixture obtained is subsequently packaged in a package that does not allow water vapour transmission between the food product and the atmosphere.

14. Food product obtainable by a method according to any one of claims 1-13.
